(19) Europäisches Patentamt
European Patent Office
Office européen des brevets

(11) **EP 2 790 254 A1**

(12) **EUROPEAN PATENT APPLICATION**
published in accordance with Art. 153(4) EPC

(43) Date of publication:
**15.10.2014 Bulletin 2014/42**

(51) Int Cl.:
**H01M 4/505** (2010.01)    **C01G 53/00** (2006.01)
**H01M 4/525** (2010.01)

(21) Application number: **12855282.5**

(22) Date of filing: **05.12.2012**

(86) International application number:
**PCT/JP2012/081481**

(87) International publication number:
**WO 2013/084923 (13.06.2013 Gazette 2013/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2011 JP 2011270041**
**09.12.2011 JP 2011270043**

(71) Applicant: **GS Yuasa International Ltd.**
**Kisshoin, Minami-ku,**
**Kyoto-shi, Kyoto 601-8520 (JP)**

(72) Inventor: **ENDO Daisuke**
**Kyoto-shi**
**Kyoto 601-8520 (JP)**

(74) Representative: **Isarpatent**
**Patent- und Rechtsanwälte**
**Friedrichstrasse 31**
**80801 München (DE)**

(54) **ACTIVE MATERIAL FOR NON-AQUEOUS ELECTROLYTE SECONDARY CELL, METHOD FOR MANUFACTURING ACTIVE MATERIAL FOR NON-AQUEOUS ELECTROLYTE SECONDARY CELL, ELECTRODE FOR NON-AQUEOUS ELECTROLYTE SECONDARY CELL, AND NON-AQUEOUS ELECTROLYTE SECONDARY CELL**

(57)    The subject of the present invention is to provide an active material for a nonaqueous electrolyte secondary battery which has a large discharge capacity and is excellent in high rate discharge performance.

Provided are an active material for a nonaqueous electrolyte secondary battery containing a lithium transition metal composite oxide which has a crystal structure of an $\alpha$-NaFeO$_2$ type and is represented by a compositional formula Li$_{1+\alpha}$Me$_{1-\alpha}$O$_2$ (Me is a transition metal element including Co, Ni and Mn, $\alpha > 0$), and a method for producing the active material. In the lithium transition metal composite oxide, a compositional ratio Li/Me of lithium Li to the transition metal element Me is 1.25 to 1.425, and an oxygen positional parameter, determined from crystal structure analysis by Rietveld method at the time of using a space group R3-m as a crystal structure model based on an X-ray diffraction pattern in a state of a discharge end, is 0.262 or less.

Fig. 1

EP 2 790 254 A1

**Description**

TECHNICAL FIELD

The present invention relates to an active material for a nonaqueous electrolyte secondary battery and a nonaqueous electrolyte secondary battery using the same.

BACKGROUND ART

Conventionally, $LiCoO_2$ is mainly used as a positive active material for a nonaqueous electrolyte secondary battery. However, a discharge capacity of the $LiCoO_2$ has been about 120 to 130 mAh/g.

A solid solution of $LiCoO_2$ and another compound is known as a material of a positive active material for a nonaqueous electrolyte secondary battery. $Li[Co_{1-2x}Ni_xMn_x]O_2$ ($0 < x \leq 1/2$), which has a crystal structure of an $\alpha$-$NaFeO_2$ type and is a solid solution of three components, $LiCoO_2$, $LiNiO_2$ and $LiMnO_2$, is reported in 2001. $LiNi_{1/2}Mn_{1/2}O_2$ or $LiCo_{1/3}Ni_{1/3}Mn_{1/3}O_2$ as an example of the solid solution has a discharge capacity of 150 to 180 mAh/g and is also excellent in charge-discharge cycle performance.

For the above-mentioned so-called "$LiMeO_2$ type" active material, the so-called "lithium excess type" active material, in which a compositional ratio Li/Me of lithium (Li) to a ratio of a transition metal (Me) is larger than 1 and for example Li/Me is 1.25 to 1.6, is known. A compositional formula of such a material can be denoted by $Li_{1+\alpha}Me_{1-\alpha}O_2$ ($\alpha > 0$). Here, when the compositional ratio Li/Me of lithium (Li) to a ratio of a transition metal (Me) is denoted by $\beta$, since $\beta = (1 + \alpha)/(1 - \alpha)$, $\alpha = 0.2$ if Li/Me is 1.5.

In Patent Document 1, an active material, which is a kind of such an active material and can be represented as a solid solution of three components of $Li[Li_{1/3}Mn_{2/3}]O_2$, $LiNi_{1/2}Mn_{1/2}O_2$ and $LiCoO_2$, is described. Further, as a method for manufacturing a battery using the above-mentioned active material, it is described that by providing a production process in which charge at least reaching a region, occurring within a positive electrode potential range of more than 4.3 V (vs. Li/Li$^+$) and 4.8 V (vs. Li/Li$^+$) or less, where a potential change is relatively flat is performed, it is possible to manufacture a battery which can achieve a discharge capacity of 177 mAh/g or more even when employing a charge method in which a maximum upper limit potential of a positive electrode at the time of charging is 4.3 (vs. Li/Li$^+$) or less.

In Patent Document 2, it is described that a lithium-containing metal composite oxide of a layered rock salt type, an oxygen positional parameter and a distance between lithium and oxygen relates to an initial discharge capacity or charge-discharge cycle performance.

Further, there are many inventions concerning a positive active material which specifies a pore size of the lithium composite oxide, but these positive active materials are not a "lithium-excess type" positive active material, and the pore size thereof is large (e.g., refer to Patent Documents 3 to 5).

Patent Document 6 discloses "A positive active material for a nonaqueous electrolyte secondary battery, wherein the positive active material is a powder of a lithium metal composite oxide represented by the formula: $Li_zNi_{1-w}M_wO_2$ (M is at least one metal element selected from the group consisting of Co, Al, Mg, Mn, Ti, Fe, Cu, Zn and Ga, and w and z satisfy $0 < w \leq 0.25$, $1.0 \leq z \leq 1.1$), and is composed of primary particles of the lithium metal composite oxide and secondary particles formed of a plurality of the primary particles gathering, shapes of the secondary particles are spherical or oval sphere-shaped, ..., an average volume of pores, which has an average diameter of 40 nm or less in measurement of a pore distribution by nitrogen adsorption method, is 0.001 to 0.008 cm$^3$/g" (claim 1). Patent Document 6 shows that a battery, which is excellent in the initial discharge capacity, the cycle performance, and power performance, is obtained by using the above-mentioned positive active material in which the average volume of pores having an average diameter of 40 nm or less is adjusted.

In the meantime, it is also publicly known that in producing the "lithium-excess type" positive active material, a compound of transition metal element including Co, Ni and Mn is coprecipitated to produce a coprecipitated precursor of transition metal carbonate, mixing the coprecipitated precursor with a lithium compound, and the resulting mixture is calcined at a temperature of 800 to 900°C (refer to Patent Documents 7 and 8). Patent Documents 7 and 8 show that a nonaqueous electrolyte battery, which is excellent in the load performance (high rate discharge performance), is obtained by using the positive active material produced by the above-mentioned method (Table 4 in Patent Document 8 also shows that the initial efficiency is high).

PRIOR ART DOCUMENTS

PATENT DOCUMENTS

Patent Document 1: JP-A-2010-086690
Patent Document 2: JP-A-2002-124261
Patent Document 3: JP-A-2000-323123
Patent Document 4: JP-A-2005-123179
Patent Document 5: JP-A-2011-29132
Patent Document 6: JP-A-2007-257985
Patent Document 7: JP-A-2007-123255
Patent Document 8: JP-A-2009-205893

## DISCLOSURE OF THE INVENTION

## PROBLEMS TO BE SOLVED BY THE INVENTION

While the so-called "lithium-excess type" positive active material as shown in Patent Document 1 is characterized by attaining a higher discharge capacity than the so-called "$LiMeO_2$ type" active material, the active material has problems that the high rate discharge performance is not sufficient, and the high rate discharge performance of the battery is inferior particularly in a region from the middle up to the end of discharge, that is, a low SOC (state of charge) region. Further, the initial efficiency was not adequately high.

In Patent Document 2, relationship between the oxygen positional parameter and the high rate discharge performance is not disclosed, and in Patent Documents 3 to 8, the oxygen positional parameter of the lithium transition metal composite oxide is not described, and it is not shown that a nonaqueous electrolyte secondary battery having a large discharge capacity and excellent high rate discharge performance is obtained by controlling the oxygen positional parameter. Further, in Patent Documents 3 to 6, it is not shown that the initial efficiency of the nonaqueous electrolyte battery is improved by adjusting a distribution of the pore size and a size of the pore volume.

It is an object of the present invention to provide an active material for a nonaqueous electrolyte secondary battery having a large discharge capacity and excellent high rate discharge performance, and a nonaqueous electrolyte secondary battery using the active material.

## MEANS FOR SOLVING THE PROBLEMS

A constitution and the operation and effect of the present invention will be described including technological thought. However, an operating mechanism includes presumption, and its right and wrong does not limit the present invention. Incidentally, the present invention may be embodied in other various forms without departing from the spirit and main features. Therefore, embodiments and examples described later are merely exemplifications in all respects and are not to be construed to limit the scope of the invention. Moreover, variations and modifications belonging to an equivalent scope of the claims are all within the scope of the invention.

The first aspect of the present invention pertains to an active material for a nonaqueous electrolyte secondary battery containing a lithium transition metal composite oxide which has a crystal structure of an $\alpha$-$NaFeO_2$ type and is represented by a compositional formula $Li_{1+\alpha}Me_{1-\alpha}O_2$ (Me is a transition metal element including Co, Ni and Mn, $\alpha$ > 0), wherein in the lithium transition metal composite oxide, a compositional ratio Li/Me of lithium Li to the transition metal element Me is 1.25 to 1.425, and an oxygen positional parameter, determined from crystal structure analysis by Rietveld method at the time of using a space group R3-m as a crystal structure model based on an X-ray diffraction pattern in a state of a discharge end, is 0.262 or less. It is preferred that the oxygen positional parameter is preferably 0.260 or more and 0.262 or less.

The second aspect of the present invention is, in the lithium transition metal composite oxide, the oxygen positional parameter is 0.262 or less, a pore size, at which a differential pore volume determined by BJH (Barrett-Joyner-Halenda) method from an adsorption isotherm using nitrogen gas adsorption method exhibits a maximum value, is 30 to 40 nm, and the peak differential pore volume is 0.75 $mm^3/(g\cdot nm)$ or more.

The third aspect of the present invention is, in the lithium transition metal composite oxide, the oxygen positional parameter is 0.262 or less, and D50, a particle size at which a cumulative volume reaches 50% in a particle size distribution of the secondary particles, is 8 $\mu$m or less. Moreover, it is preferred that the D50 is 8 $\mu$m or less, and a peak differential pore volume is 0.75 to 1.55 $mm^3/(g\cdot nm)$.

The fourth aspect of the present invention pertains to a method for producing the active material for a nonaqueous electrolyte secondary battery according to the first or second aspect of the present invention, comprising the steps of coprecipitating a compound of a transition metal element Me including Co, Ni and Mn in a solution to obtain a coprecipitated precursor of transition metal carbonate, and mixing the coprecipitated precursor with a lithium compound in such a way that a molar ratio Li/Me of Li to the transition metal element Me of the lithium transition metal composite oxide is 1.25 to 1.425, and calcining the resulting mixture at a temperature of 800 to 900°C.

The present invention pertains to an electrode for a nonaqueous electrolyte secondary battery containing the active material for a nonaqueous electrolyte secondary battery.

Further, the present invention pertains to a nonaqueous electrolyte secondary battery including the electrode for a nonaqueous electrolyte secondary battery.

## ADVANTAGES OF THE INVENTION

In accordance with the first aspect of the present invention, an active material for a nonaqueous electrolyte secondary battery having a large discharge capacity and excellent high rate discharge performance can be provided.

In accordance with the second aspect of the present invention, an active material for a nonaqueous electrolyte secondary battery having excellent initial efficiency in addition to the above-mentioned effect can be provided.

In accordance with the third aspect of the present invention, an active material for a nonaqueous electrolyte secondary battery having excellent power performance in a low SOC region in addition to the above-mentioned effect can be provided.

In accordance with the fourth aspect of the present invention, a method for producing an active material for a nonaqueous electrolyte secondary battery having a large discharge capacity and excellent high rate discharge performance can be provided.

## BRIEF DESCRIPTION OF THE DRAWINGS

Fig. 1 is a reference view for explaining an oxygen positional parameter.
Fig. 2 is a curve of a differential pore volume of Examples and Comparative Examples.

## MODE FOR CARRYING OUT THE INVENTION

In the lithium transition metal composite oxide represented by the compositional formula $Li_{1+\alpha}Me_{1-\alpha}O_2$ (Me is a transition metal element including Co, Ni and Mn, $\alpha > 0$), a molar ratio Li/Me of Li to the transition metal element Me, which is represented by $(1 + \alpha)/(1 - \alpha)$ is set to 1.25 to 1.425 in order to achieve the oxygen positional parameter of 0.262 or less and attain a nonaqueous electrolyte secondary battery having a large discharge capacity and excellent high rate discharge performance.

Ratios of the elements such as Co, Ni and Mn constituting transition metal elements composing the lithium transition metal composite oxide can be optionally selected according to required characteristics.

A molar ratio Co/Me of Co to the transition metal element Me is preferably 0.02 to 0.23, more preferably 0.04 to 0.21, and the most preferably 0.06 to 0.17 in that a nonaqueous electrolyte secondary battery having a large discharge capacity and excellent initial charge-discharge efficiency can be attained.

Further, a molar ratio Mn/Me of Mn to the transition metal element Me is preferably 0.63 to 0.72, and more preferably 0.65 to 0.71 in that a nonaqueous electrolyte secondary battery having a large discharge capacity and excellent initial charge-discharge efficiency can be attained.

The lithium transition metal composite oxide of the present invention is basically a composite oxide containing Li, Co, Ni and Mn as metal elements, but it is not excluded that the lithium transition metal composite oxide contains a small amount of other metals such as alkali metals, for example, Na, Ca, etc., alkaline earth metals, or transition metals typified by 3d transition metal such as Fe, Zn, etc. to an extent not impairing the effect of the present invention.

The lithium transition metal composite oxide of the present invention has an $\alpha$-NaFeO$_2$ structure. The lithium transition metal composite oxide of the present invention can belong to P3$_1$12 or R3-m as a space group. In the lithium transition metal composite oxide belonging to the space group P3$_1$12 of these space groups, a superlattice peak (a peak found in a monoclinic crystal of Li[Li$_{1/3}$Mn$_{2/3}$]O$_2$ type) is observed near $2\theta = 21°$ on an X-ray diffraction chart using a CuK$\alpha$ tube. However, when once charge is carried out and Li in the crystal desorbs, the superlattice peak disappears due to changes in symmetry of the crystal, and the lithium transition metal composite oxide comes to belong to the space group R3-m. Here, P3$_1$12 is a crystal structure model in which atomic positions of 3a site, 3b site and 6c site in the R3-m are refined, and when regularity is recognized in atomic arrangement in R3-m, the 3$_1$12 model is employed. Incidentally, "R3-m" should be denoted by affixing a bar "-" above "3" of "R3m".

The lithium transition metal composite oxide of the present invention is characterized in that the oxygen positional parameter, determined from crystal structure analysis from Rietveld method based on an X-ray diffraction pattern, is 0.262 or less. When the oxygen positional parameter is 0.262 or less, a nonaqueous electrolyte secondary battery having excellent high rate discharge performance can be attained. Further, the oxygen positional parameter is preferably 0.260 or more.

Incidentally, as shown in Examples described later, the positive active material in a state of a discharge end is used for a sample to be subjected to X-ray diffraction measurement for obtaining an X-ray diffraction pattern which forms a foundation for determining an oxygen positional parameter. Accordingly, when an oxygen positional parameter is evaluated on the active material for a nonaqueous electrolyte secondary battery contained in the positive electrode obtained by disassembling a nonaqueous electrolyte battery, it is necessary to previously bring the positive electrode into a state of a discharge end by low rate discharge before collecting the positive active material from the positive electrode. Further, since an active material after synthesis, that is, an active material before used for the electrode for a nonaqueous electrolyte secondary battery can be said to be in a state of a discharge end, the active material may be subjected to X-ray diffraction measurement as-is when an oxygen positional parameter is evaluated on the active material. A specific measurement procedure is as described in Examples described later.

As a method of previously bring the positive electrode into a state of a discharge end by low rate discharge before collecting the positive active material from the positive electrode, the following method is exemplified. First, a cell is configured between the positive electrode and a negative electrode which can release lithium ions in an amount required for adequately bringing the positive electrode into a state of a discharge end, and discharge of the positive electrode is performed. Metal lithium may be used as the negative electrode. While a two terminal cell may be used as the cell, a three terminal cell provided with a reference electrode is used, and a positive potential is controlled and monitored with respect to the reference electrode. Where possible, an electrolyte solution to be used for the cell preferably has the composition which is identical to that of the nonaqueous electrolyte used in the nonaqueous electrolyte secondary battery. Examples of an operation of discharging the positive electrode using the above-mentioned cell include an operation in which continuous discharge or intermittent discharge is performed at a current of 0.1 CmA or less by setting a discharge end potential to 2.0 V (vs. Li/Li$^+$). After the operation of discharging, it is confirmed that an open circuit potential becomes 3.0 V (vs. Li/Li$^+$) or less by providing a sufficient quiescent time. When the open circuit potential after the operation of discharging exceeds 3.0 V (vs. Li/Li$^+$), it is required to repeat the above-mentioned operation by further employing a smaller discharge current value until the open circuit potential becomes 3.0 V (vs. Li/Li$^+$) or less.

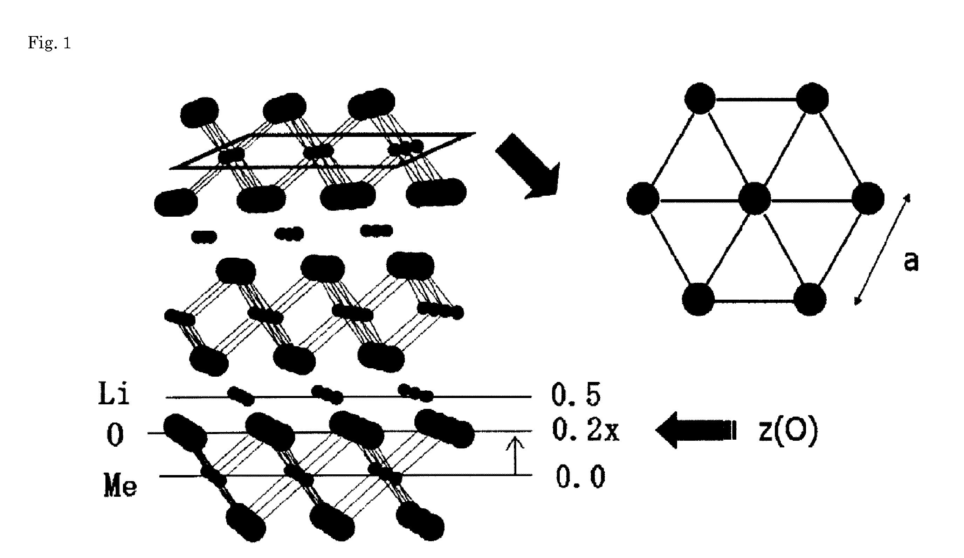

In the present specification, the oxygen positional parameter refers to a value of z at the time when a space coordinate of Me (transition metal) is defined as (0, 0, 0), a space coordinate of Li (lithium) is defined as (0, 0, 1/2), and a space coordinate of O (oxygen) is defined as (0, 0, z) with respect to a crystal structure of an $\alpha$-NaFeO$_2$ type of the lithium transition metal composite oxide belonging to the space group R3-m. That is, the oxygen positional parameter is a relative index indicating how far an O (oxygen) position is from a Me (transition metal) position. Fig. 1 is shown as a reference drawing.

Further, in the lithium transition metal composite oxide of the present invention, it is preferred that a pore size, at which a differential pore volume determined by BJH method from an adsorption isotherm using nitrogen gas adsorption method exhibits a maximum value, falls within the range of 30 to 40 nm, and the peak differential pore volume is 0.75 mm$^3$/(g•nm) or more. By achieving the peak differential pore volume of 0.75mm$^3$/(g•nm) or more, a nonaqueous electrolyte secondary battery having excellent initial efficiency can be obtained.

Moreover, in the lithium transition metal composite oxide of the present invention, it is preferred to adjust the D50, a particle size at which a cumulative volume reaches 50% in a particle size distribution of the secondary particles, to 8 $\mu$m or less in order to make power performance of the nonaqueous electrolyte secondary battery in a low SOC region excellent.

Further, it is preferred that D50 of 8 $\mu$m or less is achieved, and a pore size, at which a differential pore volume determined by BJH method from an adsorption isotherm using nitrogen gas adsorption method exhibits a maximum value, falls within the range of 30 to 40 nm, and the peak differential pore volume is 0.75 to 1.55 mm$^3$/(g•nm).

When the lithium transition metal composite oxide produced by using a synthetic procedure described in Examples described later is observed with a scanning electron microscope (SEM), spherical secondary particles composed of primary particles tightly agglomerating are found. Therefore, a particle size distribution of the secondary particles can be measured by pulverizing the resulting lithium transition metal composite oxide with a mortal to such an extent that the agglomeration of secondary particles is loosened to level particle sizes, and subjecting the pulverized composite oxide to the measurement of a particle size distribution. A specific procedure of the particle size distribution measurement is as described in Examples described later.

The pore volume of the lithium transition metal composite oxide of the present invention is measured by using nitrogen gas adsorption method. A cumulative pore volume curve is determined by applying BJH method based on the assumption that the pore is cylindrical for an adsorption isotherm obtained on the desorption side of the above measurement. Then, a differential pore volume curve in which a horizontal axis is a pore size (nm) and a vertical axis is a pore volume (mm$^3$/(g•nm)) is obtained by linearly differentiating the cumulative pore volume curve. In the present specification, the phrase "pore size at which the differential pore volume exhibits a maximum value" refers to a value of the horizontal axis corresponding to a point at which the differential pore volume curve exhibits a maximum value. Further, the term "peak differential pore volume" refers to a value of the vertical axis corresponding to a point at which the differential pore volume curve exhibits a maximum value. A specific measurement procedure is as described in Examples described later.

Next, a method for producing an active material for a nonaqueous electrolyte secondary battery of the present invention will be described.

The active material for a nonaqueous electrolyte secondary battery of the present invention can be basically prepared by adjusting a raw material so as to contain metal elements composing the active materials (Li, Mn, Co, Ni) just as the intended composition of the active material (lithium transition metal composite oxide), and finally calcining the raw material. However, an amount of a Li material is preferably charged excessively by about 1 to 5% considering that a part of the Li material is disappeared during calcination.

As a method for preparing a lithium transition metal composite oxide having the intended composition, the so-called "solid-phase method" in which the respective salts of Li, Co, Ni, and Mn are mixed and calcined, and the "coprecipitation method" of previously preparing a coprecipitated precursor in which Co, Ni, and Mn exist in a particle, mixing a salt of Li in the coprecipitated precursor, and calcining the resulting mixture are known. In a synthesis process by the "solid-phase method", particularly Mn is hardly solid-solved uniformly in Co or Ni. Therefore, it is difficult to obtain a sample in which the respective elements are distributed uniformly in a particle. In producing the active material for a nonaqueous electrolyte secondary battery of the present invention, selection between the "solid-phase method" and the "coprecipitation method" is not particularly limited. However, when the "solid-phase method" is selected, it is extremely difficult to produce the positive active material of the present invention. Selection of the "coprecipitation method" is preferred in that a more uniform active material is easily obtained.

When preparing the coprecipitated precursor, since Mn among Co, Ni and Mn is easily oxidized, and it is not easy to prepare the coprecipitated precursor in which Co, Ni and Mn are uniformly distributed in a divalent state, uniform mixing of Co, Ni and Mn at an atomic level tends to be insufficient. Particularly, in the range of the composition of the present invention, a ratio of Mn is larger than those of Co and Ni, it is important to remove dissolved oxygen in the aqueous solution. A method of removing dissolved oxygen includes a method comprising bubbling a gas not containing oxygen. The gas not containing oxygen is not particularly limited, and a nitrogen gas, an argon gas, or carbon dioxide ($CO_2$) can be used. Particularly when the coprecipitated precursor of transition metal carbonate (hereinafter, referred to as a "coprecipitated carbonate precursor") is prepared like Example described later, it is preferred to employ carbon dioxide as a gas not containing oxygen since an environment in which carbonate is more easily produced is provided.

A pH in the step of coprecipitating compounds containing Co, Ni and Mn, respectively, in a solution to produce a precursor is not limited, and the pH can be 7.5 to 11 when a coprecipitated carbonate precursor is prepared as the coprecipitated precursor. In order to increase a tapped density, it is preferred to control a pH. When the pH is adjusted to 9.4 or less, the tapped density can be 1.25 g/cc or more to improve the high rate discharge performance. Moreover, when the pH is adjusted to 8.0 or less, since a particle growing rate can be accelerated, a time of stirring continued after the completion of dropwise addition of a raw material aqueous solution can be shortened.

Preparation of the coprecipitated precursor preferably gives a compound in which Mn, Ni, and Co are uniformly mixed. In the present invention, in order to achieve the oxygen positional parameter of the lithium transition metal composite oxide of 0.262 or less and achieve the peak differential pore volume of 0.75mm³/(g•nm) or more, the coprecipitated precursor is preferably carbonate. Further, by using a crystallization reaction using a complexing agent, a precursor having a larger bulk density can also be prepared. In doing so, when the compound is mixed with a Li source and calcined, an active material with a higher density can be attained, and therefore energy density per electrode area can be improved.

As the raw materials to be used for the preparation of the coprecipitated precursor, those in any state may be employed as long as they can cause precipitation reaction with an aqueous alkaline solution, and metal salts with high solubility is preferably used.

Examples of raw materials for the coprecipitated precursor include, as a Mn compound, manganese oxide, manganese carbonate, manganese sulfate, manganese nitrate, and manganese acetate; as a Ni compound, nickel hydroxide, nickel carbonate, nickel sulfate, nickel nitrate, and nickel acetate; and as a Co compound, cobalt sulfate, cobalt nitrate, and cobalt acetate.

In the crystallization reaction, while the raw material aqueous solution of the coprecipitated precursor is added dropwise and supplied to a reaction vessel kept alkaline to obtain a coprecipitated precursor, a rate of the dropwise addition of the raw material aqueous solution has a large effect on the uniformity of an element distribution in a particle of the coprecipitated precursor to be produced. Particularly, Mn hardly forms the uniform element distribution with Co or Ni, and therefore it needs careful consideration. A preferred rate of dropwise addition is affected by a reaction vessel size, stirring conditions, a pH or a reaction temperature, and the rate is preferably 10 ml/min or less.

Further, in order to achieve the oxygen positional parameter of the lithium transition metal composite oxide of 0.262 or less, the dropwise addition rate is preferably set to 10 ml/min or less, and more preferably 5 ml/min or less. As shown in Comparative Example described later, when the dropwise addition rate is as high as 30 ml/min, the oxygen positional parameter may exceed 0.262.

Further, when a complexing agent is present in the reaction vessel and certain convection conditions are applied, by further continuing stirring after the completion of dropwise addition of the raw material aqueous solution, rotation of particles and revolution of particles in a stirring vessel are promoted, and in this process, particles are formed stepwise into a concentric spherical shape while impinging on one another. That is, the coprecipitated precursor is formed by undergoing a two-step reaction of a metal complex forming reaction occurring when the raw material aqueous solution is added dropwise to the inside of the reaction vessel and a precipitate forming reaction in which the metal complex is produced during staying in the reaction vessel. Accordingly, a coprecipitated precursor with a desired particle size can be attained by appropriately selecting the time of stirring further continued after the completion of dropwise addition of the raw material aqueous solution.

A preferable time of stirring continued after the completion of dropwise addition of the raw material aqueous solution, on which a size of the reaction vessel, a stirring condition, a pH, a reaction temperature and the like have effects, is preferably 0.5 hour or more, more preferably 1 hour or more, and the most preferably 3 hours or more in order to grow particles in the form of uniform spherical particle. Further, in order to reduce a possibility that power performance of a battery becomes insufficient because the particle size becomes too large, the time of stirring continued is preferably 15 hours or less, more preferably 10 hours or less, and the most preferably 5 hours or less.

Further, a preferred time of stirring continued for adjusting D50, a particle size at which a cumulative volume reaches 50% in a particle size distribution of the secondary particles of the lithium transition metal composite oxide, to 8 $\mu$m or less varies depending on a pH to be controlled. For example, when the pH is controlled so as to be 8.3 to 9.0, the time of stirring continued is preferably 4 to 5 hours, and when the pH is controlled so as to be 7.6 to 8.2, the time of stirring continued is preferably 1 to 3 hours.

The active material for a nonaqueous electrolyte secondary battery in the present invention can be suitably produced by mixing the coprecipitated precursor with a Li compound and thereafter carrying out heat treatment for the mixture. Use of lithium hydroxide, lithium carbonate, lithium nitrate, lithium acetate or the like as the Li compound makes it possible to preferably carry out the production.

The calcination temperature has an effect on a reversible capacity of the active material.

When the calcining temperature is too high, the resulting active material corrupts while being accompanied with an oxygen releasing reaction and in addition to the hexagonal main phase, a phase defined as monoclinic Li[Li$_{1/3}$Mn$_{2/3}$]O$_2$ tends to be observed as a separate phase but not as a solid solution phase. It is not preferred to contain a too high proportion of such a separate phase since this leads to a reduction of the reversible capacity of the active material. With respect to such a material, impurity peaks are observed near 35° and 45° in the X-ray diffraction pattern. Accordingly, it is preferred that the calcination temperature is adjusted lower than the temperature which affects the oxygen releasing reaction of the active material. In the composition range of the present invention, the oxygen releasing temperature of the active material is around 1000°C or higher; however, the oxygen releasing temperature slightly differs depending on the composition of the active material, and therefore it is preferred to previously check the oxygen releasing temperature of the active material. Particularly, it is confirmed that the oxygen releasing temperature of a precursor is shifted to the lower temperature side as the Co amount contained in a sample is larger, and therefore it needs careful consideration. As a method for checking the oxygen releasing temperature of the active material, a mixture of a coprecipitated precursor and a lithium compound may be subjected to thermogravimetry (DTA-TG measurement) in order to simulate the calcination reaction process; however in this method, platinum employed for a sample chamber of a measurement instrument may be possibly corroded with an evaporated Li component to damage the instrument, and therefore a composition, of which crystallization is promoted to a certain extent by employing a calcination temperature of about 500°C, is preferable to be subjected to thermogravimetry.

On the other hand, when the calcination temperature is too low, the crystallization does not adequately proceed and the electrode property tends to be lowered. In the present invention, it is preferred to set the calcination temperature to at least 800°C when the precursor is a coprecipitated carbonate. Particularly, an optimum calcination temperature in the case where the precursor is a coprecipitated carbonate tends to be lower as the Co amount contained in the precursor is larger. It is possible to lower the resistance of particle boundaries and promote smooth lithium ion transfer by sufficiently crystallizing a crystallite composing the primary particle as described above.

The present inventor verified, by analyzing a half width of the diffraction peak of the active material of the present invention in detail, that when the precursor is a coprecipitated hydroxide, strains remain in the lattice in the sample which is synthesized at a calcination temperature less than 650°C and can be significantly removed by being synthesized at a temperature of 650°C or more, and when the precursor is a coprecipitated carbonate, strains remain in the lattice in the sample which is synthesized at a calcination temperature less than 750°C and can be significantly removed by being synthesized at a temperature of 750°C or more. Further, the size of the crystallite becomes large in proportional to the increase of the synthesis temperature. Accordingly, with respect to the composition of the active material of the present invention, a desirable discharge capacity is obtained by forming particles sufficiently grown in the crystallite size with little strains in the lattice of the system. Specifically, it is found preferable to employ a synthesis temperature (a calcination temperature) and composition of a ratio Li/Me at which the strain degree affecting the lattice constant is 2% or lower and the crystallite size is grown to 50 nm or more. It is preferred as a resulting effect that by forming the active material into an electrode and performing charge-discharge, the crystallite size is maintained at 30 nm or more during the charge-discharge process although changes in the size due to expansion/contraction are found.

As described above, while a preferred calcining temperature varies depending on an oxygen releasing temperature of the active material and therefore it is difficult to set a preferred range of the calcination temperature comprehensively. In the present invention, it is preferred to set the calcination temperature to around 800 to 900°C in order to make the discharge capacity sufficient when the compositional ratio Li/Me is 1.25 to 1.425.

Further, in the present invention, in order to achieve the oxygen positional parameter of the lithium transition metal composite oxide of 0.262 or less, the calcination temperature is preferably set to 800 to 900°C. As shown in Comparative Example described later, when the calcination temperature is as low as 700°C, and when the calcination temperature is as high as 950°C or 1000°C, the oxygen positional parameter does not become 0.262 or less.

Moreover, the calcination temperature is preferably 800 to 900°C in order to achieve the peak differential pore volume of 0.75 to 1.55 mm$^3$/(g•nm).

A calcination time is preferably a time less than 10 hours, for example, in the calcination at 900°C since the time is too long, the peak differential pore volume is smaller than 0.75 mm$^3$/(g•nm).

A shape and a size of a particle of the lithium transition metal composite oxide obtained by undergoing a calcining step maintain approximately a shape and a size of a particle of the precursor before calcining, but a temperature raising rate from room temperature to calcination temperature has an effect on a degree of growth of a crystal particle of the lithium transition metal composite oxide, and emerges as the difference in the pore size distribution. That is, when the temperature raising rate is too large, the lithium transition metal composite oxide with a small pore size tends to be produced, adversely affecting the high rate discharge performance. From this viewpoint, the temperature raising rate is preferably 200°C/h or less, and more preferably 100°C/h or less.

Further, in order to achieve the oxygen positional parameter of the lithium transition metal composite oxide of 0.262 or less, the temperature raising rate is preferably set to 200°C/h or less. As shown in Comparative Example described later, when the temperature raising rate is as high as 400 to 450°C/h, the oxygen positional parameter may exceed 0.262.

A nonaqueous electrolyte to be used for the nonaqueous electrolyte secondary battery of the present invention is not particularly limited and those generally proposed for use for lithium batteries and the like can be used. Examples of nonaqueous solvents to be used for the nonaqueous electrolyte include, but are not limited to, one compound or a mixture of two or more of compounds of cyclic carbonic acid esters such as propylene carbonate, ethylene carbonate, butylene carbonate, chloroethylene carbonate, and vinylene carbonate; cyclic esters such as γ-butyrolactone and γ-valerolactone; chain carbonates such as dimethyl carbonate, diethyl carbonate, and ethylmethyl carbonates; chain esters such as methyl formate, methyl acetate, and methyl butyrate; tetrahydrofuran and derivatives thereof; ethers such as 1,3-dioxane, 1,4-dioxane, 1,2-dimethoxyethane, 1,4-dibutoxyethane, and methyl diglyme; nitriles such as acetonitrile and benzonitrile; dioxolan and derivatives thereof; and ethylene sulfide, sulfolane, sultone and derivatives thereof.

Examples of electrolytic salts to be used for the nonaqueous electrolyte include inorganic ionic salts containing one of lithium (Li), sodium (Na), and potassium (K) such as $LiClO_4$, $LiBF_4$, $LiAsF_6$, $LiPF_6$, LiSCN, LiBr, LiI, $Li_2SO_4$, $Li_2B_{10}Cl_{10}$, $NaClO_4$, NaI, NaSCN, NaBr, $KClO_4$, and KSCN; and organic ionic salts such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzoate,

$(C_2H_5)_4N$-phtalate, lithium stearylsulfonate, lithium octylsulfonate, and lithium dodecylbenzenesulfonate, and these ionic compounds may be used alone or in combination of two or more of them.

Moreover, when $LiPF_6$ or $LiBF_4$ is mixed with a lithium salt having a perfluoroalkyl group such as $LiN(C_2F_5SO_2)_2$ for use, since the viscosity of the electrolyte can be further lowered, the low temperature properties can be further improved and self-discharge can be suppressed, and therefore it is more preferable.

Further, an ambient temperature molten salt or ionic liquid may be used as the nonaqueous electrolyte.

The concentration of the electrolytic salt in the nonaqueous electrolyte is preferably 0.1 mol/l to 5 mol/l, and more preferably 0.5 mol/l to 2.5 mol/l in order to reliably obtain a nonaqueous electrolyte battery having high battery performance.

A negative electrode material is not particularly limited, and any one may be selected as long as it can precipitate or absorb lithium ions. Examples thereof include a titanium-based materials such as lithium titanate having a spinel type crystal structure typified by $Li[Li_{1/3}Ti_{5/3}]O_4$; alloy type lithium metal such as Si, Sb and Sn-based materials, lithium alloys (lithium metal-containing alloy such as lithium-silicon, lithium-aluminum, lithium-lead, lithium-tin, lithium-aluminum-tin, lithium-gallium, and Wood alloy), lithium composite oxide (lithium-titanium), silicon oxide as well as alloys capable of absorbing and releasing lithium, carbon materials (e.g. graphite, hard carbon, low temperature calcined carbon, amorphous carbon) and the like.

A powder of the positive active material and a powder of the negative active material preferably have an average particle size of 100 μm or less. Particularly, the powder of the positive active material is desirable to be 10 μm or less for improving the high power performance of the nonaqueous electrolyte battery. In order to obtain a powder in a prescribed shape, a pulverizer or a classifier is used. For example, usable are mortars, ball mills, sand mills, vibration ball mills, planetary ball mills, jet mills, counter jet mills, swirling current type jet mill, and sieves. At the time of pulverization, wet pulverization in co-presence of water or an organic solvent such as hexane can also be employed. A classification method is not particularly limited, and sieves, pneumatic classifiers and the like are employed in both dry and wet manners as required.

The positive active material and the negative active material, which are main constituent components of a positive electrode and a negative electrode, are described in detail, and the positive electrode and the negative electrode may contain an electric conductive agent, a binder, a thickener, a filler and the like as other constituent components besides the above-mentioned main constituent components.

The electric conductive agent is not particularly limited as long as it is an electron conductive material having no adverse effect on the battery performance, and it may be, in general, electric conductive materials such as natural graphite (scaly graphite, flake graphite, amorphous graphite), artificial graphite, carbon black, acetylene black, Ketjen black, carbon whisker, carbon fibers, powders of metals (copper, nickel, aluminum, silver, gold, etc.), metal fibers and electric conductive ceramic materials, and one or a mixture of these materials may be contained in the positive electrode and the negative electrode.

As an electric conductive agent among them, acetylene black is preferred from the viewpoints of electron conductivity and coatability. The additive amount of the electric conductive agent is preferably 0.1% by weight to 50% by weight, and particularly preferably 0.5% by weight to 30% by weight with respect to the total weight of the positive electrode or the negative electrode. Particularly, when acetylene black is pulverized into ultrafine particles of 0.1 to 0.5 $\mu$m and used, it is preferred since the carbon amount to be needed can be saved. A method of mixing these compounds is physical mixing and uniform mixing is preferred. Therefore, powder mixers such as V-shaped mixers, S-shaped mixers, Raikai mixers, ball mills, and planetary ball mills may be used to carry out dry or wet mixing.

As the binder, in general, thermoplastic resins such as polytetrafluoroethylene (PTFE), polyvinylidene fluoride (PVDF), polyethylene and polypropylene; and polymers having rubber elasticity such as ethylene-propylene-diene terpolymer (EPDM), sulfonated EPDM, styrene-butadiene rubber (SBR) and fluorine-contained rubber can be used singly or in combination of two or more of them. The additive amount of the binder is preferably 1 to 50% by weight and particularly preferably 2 to 30% by weight with respect to the total weight of the positive electrode or the negative electrode.

The filler is not particularly limited as long as it is a material having no adverse effect on the battery performance. In general, usable are olefin-based polymers such as polypropylene and polyethylene; amorphous silica, alumina, zeolite, glass, carbon and the like. The additive amount of the filler is preferably 30% by weight or less with respect to the total weight of the positive electrode or the negative electrode.

The positive electrode and the negative electrode is preferably prepared by kneading the main constituent components (the positive active material in the positive electrode and the negative active material in the negative electrode) and other materials to form a composite, then mixing the composite with an organic solvent such as N-methylpyrrolidone, toluene or the like, applying the resulting mixed solutions onto current collectors described below or press-bonding the mixed solution to the current collectors, and carrying out heat treatment at a temperature of about 50°C to 250°C for about 2 hours. The application method is preferably carried out to give an arbitrary thickness and an arbitrary shape by using means such as roller coating of an applicator roll or the like, screen coating, doctor blade coating, spin coating, and bar coaters; however, it is not limited thereto.

As a separator, porous membranes and nonwoven fabrics having excellent high rate discharge performance are preferably used alone or in combination. Examples of materials constituting a separator for a nonaqueous electrolyte battery include polyolefin-based resins typified by polyethylene and polypropylene; polyester-based resins typified by polyethylene terephthalate and polybutylene terephthalate; polyvinylidene fluoride, vinylidene fluoride-hexafluoropropylene copolymers, vinylidene fluoride-perfluorovinyl ether copolymers, vinylidene fluoride-tetrafluoroethylene copolymers, vinylidene fluoride-trifluoroethylene copolymers, vinylidene fluoride-fluoroethylene copolymers, vinylidene fluoride-hexafluoroacetone copolymers, vinylidene fluoride-ethylene copolymers, vinylidene fluoride-propylene copolymers, vinylidene fluoride-trifluoropropylene copolymers, vinylidene fluoride-tetrafluoroethylene-hexafluoropropylene copolymers, and vinylidene fluoride-ethylene-tetrafluoroethylene copolymers.

The porosity of the separator is preferably 98% by volume or less from the viewpoint of strength. Further, from the viewpoint of charge-discharge property, the porosity is preferably 20% by volume or more.

Further, the separator may be a polymer gel composed of, for example, a polymer of acrylonitrile, ethylene oxide, propylene oxide, methyl methacrylate, vinyl acetate, vinylpyrrolidone or polyvinylidene fluoride and an electrolyte. When the nonaqueous electrolyte is used in a gel state as described above, it is preferable since it is effective to prevent liquid leakage.

Furthermore, in the separator, when the above-mentioned porous membranes or nonwoven fabrics are used in combination with the polymer gel, it is preferable since the electrolyte retention property is improved. That is, a film is obtained by coating the surface and pore wall surfaces of a polyethylene fine porous membrane with a solvophilic polymer having a thickness of several $\mu$m or less and retaining the electrolyte within the pores of the film, so that the solvophilic polymer can gelate.

Examples of the solvophilic polymer include polyvinylidene fluoride and also polymers crosslinked by acrylate monomers having ethylene oxide groups or ester groups, epoxy monomers, and monomers having isocyanato groups. Crosslinking reactions of the monomers can be carried out by heating or using ultraviolet rays (UV) with a radical initiator in combination or using activation beam such as electron beam (EB).

The configuration of the nonaqueous electrolyte secondary battery is not particularly limited and examples thereof include cylindrical batteries, prismatic batteries, and flat type batteries including the positive electrode, negative electrode, and roll type separator.

The conventional positive active material and the positive active material of the present invention can be charged and discharged when the positive electrode potential reaches the vicinity of 4.5 V (vs. Li/Li$^+$). However, when the positive electrode potential at the time of charge is too high, there is a possibility that a nonaqueous electrolyte is oxidized and decomposed to cause a reduction in battery performance depending on a type of the nonaqueous electrolyte to be used. Accordingly, there may be cases where a nonaqueous electrolyte secondary battery capable of achieving a sufficient discharge capacity even when a charge method, in which a maximum upper limit potential of the positive electrode at the time of charge is 4.3 V (vs. Li/Li$^+$) or less, is employed at the time of use, is required. When the active material of the present invention is used, it is possible to extract discharge capacity of about 200 mAh/g or more, which exceeds a capacity of a conventional positive active material even when a charge method, in which a maximum upper limit potential of the positive electrode at the time of charge is lower than 4.5 V (vs. Li/Li$^+$), for example, 4.4 V (vs. Li/Li$^+$) or less or 4.3 V (vs. Li/Li$^+$) or less, is employed at the time of use.

In order to make the positive active material of the present invention have a high discharge capacity, it is preferred that a ratio, at which transition metal elements composing the lithium transition metal composite oxide exist in a part other than a transition metal site in a crystal structure of a layered rock salt type, is low. This can be achieved by adequately uniform distribution of transition metal elements such as Co, Ni and Mn in the precursor to be subjected to a calcining step, and by selecting appropriate conditions of a calcining step for promoting crystallization of an active material sample. When transition metals are not uniformly distributed in the precursor to be subjected to a calcining step, a sufficient discharge capacity cannot be obtained. The reason for this is not necessarily clear, but the present inventor considers that this results from the fact that when transition metals are not uniformly distributed in the precursor to be subjected to a calcining step, the resulting lithium transition metal composite oxide falls into a state of so-called cation mixing where a part of transition metal elements exists in a part other than a transition metal site, that is, a lithium site, in a crystal structure of a layered rock salt type. Similar consideration can also be applied in a crystallization process in the calcining step. When crystallization of the active material sample is inadequate, cation mixing in a crystal structure of a layered rock salt type tends to occur. The precursor in which distributions of the transition metal elements are highly uniform tends to have a larger intensity ratio between the diffraction peaks of a (003) line and a (104) line based on X-ray diffraction measurement. In the present invention, it is preferred that the ratio between the diffraction peak intensity $I_{(003)}$ of a (003) line and the diffraction peak intensity $I_{(104)}$ of a (104) line based on the X-ray diffraction measurement satisfies the relation of $I_{(003)}/I_{(104)} \geq 1.20$. Further, it is preferred to satisfy the relation of $I_{(103)}/I_{(104)} > 1$ in a state of a discharge end after charge-discharge. When a synthesis condition or a synthesis procedure of the precursor is improper, the peak intensity ratio becomes smaller and often becomes a value less than 1.

By employing synthesis conditions and synthesis procedures respectively described in the present specification, the above-mentioned high performance positive active material can be obtained. Particularly, even when an upper limit potential of charge is set below 4.5 V, for example, 4.4 V or 4.3 V, a positive active material for a nonaqueous electrolyte secondary battery which can attain a high discharge capacity can be formed.

(Example 1)

First, 14.08 g of cobalt sulfate heptahydrate, 21.00 g of nickel sulfate hexahydrate and 65.27 g of manganese sulfate pentahydrate were weighed, and all of these compounds were dissolved in 200 ml of ion-exchanged water to prepare a 2.00 M sulfate aqueous solution in which the molar ratio of Co, Ni, and Mn was 12.5 : 19.94 : 67.56. Meanwhile, 750 ml of ion-exchanged water was poured into a 2 liter reaction vessel, and $CO_2$ was dissolved in the ion-exchanged water by bubbling a $CO_2$ gas for 30 minutes in the ion-exchanged water. A temperature of the reaction vessel was set to 50°C ($\pm 2$°C), and the sulfate aqueous solution was added dropwise at a rate of 3 ml/min while stirring the content in the reaction vessel at a rotational speed of 700 rpm using a paddle blade equipped with a stirring motor. Here, from the start of the dropwise addition until the completion thereof, an aqueous solution containing 2.00 M of sodium carbonate and 0.4 M of ammonia was appropriately added dropwise to control the content in the reaction vessel so as to always maintain a pH of 7.9 ($\pm$ 0.05). Stirring of the inside of the reaction vessel was further continued for 3 hours after the completion of dropwise addition. After the stirring was stopped, the solution was kept still for 12 hours or more.

Next, using a suction filtration apparatus, particles of coprecipitated carbonate salt produced in the reaction vessel were separated, and sodium ions adhering to the particles were cleaned and removed with ion-exchange water, and the resulting particles were dried at 100°C under ordinary pressure in an air atmosphere by using an electric furnace. Thereafter, particles were pulverized for several minutes by using an automatic mortar made of agate in order to level particle sizes. In this way, a coprecipitated carbonate precursor was prepared.

Then, 0.943 g of lithium carbonate was added to 2.304 g of the coprecipitated carbonate precursor, and the resulting mixture was adequately mixed by using an automatic mortar made of agate to prepare a mixed powder in which the molar ratio of Li and (Co, Ni, Mn) was 125 : 100. The mixed powder was molded at a pressure of 6 MPa by using a pelleting machine to be formed into pellets with a diameter of 25 mm. The amount of the mixed powder subjected to pelleting was determined so as to be equivalent to 2 g of a mass of an assumed final product. One of the pellets was placed on a boat which is made of alumina and has the whole length of about 100 mm, and the boat was set up in a box electric furnace (model number: AMF20), and the temperature of the pellet was raised from room temperature to 900°C over about 10 hours (temperature raising rate 90°C/h) under ordinary pressure in an air atmosphere, and the pellet was calcined at 900°C for 4 hours. Internal dimensions of the box electric furnace were 10 cm long, 20 cm wide and 30 cm deep, and electrically-heated wires are disposed at 20 cm intervals in a width direction. After calcination, a heater was turned off to leave the boat made of alumina in the furnace to be cooled naturally. As a result of this, a temperature of the furnace was lowered to about 200°C 5 hours after, but a subsequent temperature lowering rate is slightly mild. After a lapse of all night and all day, it was checked that a temperature of the furnace was 100°C or less, and then the pellet was taken out and pulverized for several minutes with an automatic mortar made of agate in order to level particle sizes. A lithium transition metal composite oxide of Example 1 was prepared in this way.

(Example 2)

A lithium transition metal composite oxide of Example 2 was prepared by the same procedure as in Example 1 except for using, as a mixed powder to be subjected to pellet-molding, a mixed powder, in which the molar ratio of Li and (Co, Ni, Mn) was 127.5 : 100, prepared by adding 0.957 g of lithium carbonate to 2.291 g of the coprecipitated carbonate precursor prepared in Example 1, and adequately mixing the resulting mixture by using an automatic mortar made of agate.

(Example 3)

A lithium transition metal composite oxide of Example 3 was prepared by the same procedure as in Example 1 except for using, as a mixed powder to be subjected to pellet-molding, a mixed powder, in which the molar ratio of Li and (Co, Ni, Mn) was 130 : 100, prepared by adding 0.970 g of lithium carbonate to 2.278 g of the coprecipitated carbonate precursor prepared in Example 1, and adequately mixing the resulting mixture by using an automatic mortar made of agate.

(Example 4)

A lithium transition metal composite oxide of Example 4 was prepared by the same procedure as in Example 1 except for using, as a mixed powder to be subjected to pellet-molding, a mixed powder, in which the molar ratio of Li and (Co, Ni, Mn) was 132.5 : 100, prepared by adding 0.983 g of lithium carbonate to 2.265 g of the coprecipitated carbonate precursor prepared in Example 1, and adequately mixing the resulting mixture by using an automatic mortar made of agate.

(Example 5)

A lithium transition metal composite oxide of Example 5 was prepared by the same procedure as in Example 1 except for using, as a mixed powder to be subjected to pellet-molding, a mixed powder, in which the molar ratio of Li and (Co, Ni, Mn) was 135 : 100, prepared by adding 0.996 g of lithium carbonate to 2.253 g of the coprecipitated carbonate precursor prepared in Example 1, and adequately mixing the resulting mixture by using an automatic mortar made of agate.

(Example 6)

A lithium transition metal composite oxide of Example 6 was prepared by the same procedure as in Example 1 except for using, as a mixed powder to be subjected to pellet-molding, a mixed powder, in which the molar ratio of Li and (Co, Ni, Mn) was 140 : 100, prepared by adding 1.022 g of lithium carbonate to 2.228 g of the coprecipitated carbonate precursor prepared in Example 1, and adequately mixing the resulting mixture by using an automatic mortar made of agate.

(Example 7)

A lithium transition metal composite oxide of Example 7 was prepared by the same procedure as in Example 1 except for using, as a mixed powder to be subjected to pellet-molding, a mixed powder, in which the molar ratio of Li and (Co, Ni, Mn) was 142.5 : 100, prepared by adding 1.035 g of lithium carbonate to 2.216 g of the coprecipitated carbonate precursor prepared in Example 1, and adequately mixing the resulting mixture by using an automatic mortar made of agate.

(Example 8)

A lithium transition metal composite oxide of Example 8 was prepared by the same procedure as in Example 3 except for changing a time of stirring of the inside of the reaction vessel further continued after the completion of dropwise addition of the sulfate aqueous solution to 1 hour in the step of preparing the coprecipitated carbonate precursor.

(Example 9)

A lithium transition metal composite oxide of Example 9 was prepared by the same procedure as in Example 3 except for changing a time of stirring of the inside of the reaction vessel further continued after the completion of dropwise addition of the sulfate aqueous solution to 5 hours in the step of preparing the coprecipitated carbonate precursor.

(Example 10)

A lithium transition metal composite oxide of Example 10 was prepared by the same procedure as in Example 3 except for changing a time of stirring of the inside of the reaction vessel further continued after the completion of dropwise addition of the sulfate aqueous solution to 10 hours in the step of preparing the coprecipitated carbonate precursor.

(Example 11)

A lithium transition metal composite oxide of Example 11 was prepared by the same procedure as in Example 3 except for changing a time of stirring of the inside of the reaction vessel further continued after the completion of dropwise addition of the sulfate aqueous solution to 15 hours in the step of preparing the coprecipitated carbonate precursor.

(Example 12)

A lithium transition metal composite oxide of Example 12 was prepared by the same procedure as in Example 3 except for changing a time of stirring of the inside of the reaction vessel further continued after the completion of dropwise addition of the sulfate aqueous solution to 20 hours in the step of preparing the coprecipitated carbonate precursor.

(Example 13)

A lithium transition metal composite oxide of Example 13 was prepared by the same procedure as in Example 7 except for changing a time of stirring of the inside of the reaction vessel further continued after the completion of dropwise addition of the sulfate aqueous solution to 1 hour in the step of preparing the coprecipitated carbonate precursor.

(Example 14)

A lithium transition metal composite oxide of Example 14 was prepared by the same procedure as in Example 3 except that in the calcining step, the temperature was raised from room temperature to 800°C over about 10 hours (temperature raising rate 80°C/h), and the pellet was calcined at 800°C for 4 hours.

(Example 15)

A lithium transition metal composite oxide of Example 15 was prepared by the same procedure as in Example 3 except for preparing an aqueous solution of sulfuric acid in such a way that the molar ratio of Co, Ni, and Mn, contained in the aqueous solution of sulfuric acid, was 4.0 : 28.44 : 67.56.

(Example 16)

A lithium transition metal composite oxide of Example 16 was prepared by the same procedure as in Example 3 except for preparing an aqueous solution of sulfuric acid in such a way that the molar ratio of Co, Ni, and Mn, contained in the aqueous solution of sulfuric acid, was 21.0 : 11.44 : 67.56.

(Example 17)

A lithium transition metal composite oxide of Example 17 was prepared by the same procedure as in Example 3 except for preparing an aqueous solution of sulfuric acid in such a way that the molar ratio of Co, Ni, and Mn, contained in the aqueous solution of sulfuric acid, was 12.5 : 24.5 : 63.0.

(Example 18)

A lithium transition metal composite oxide of Example 18 was prepared by the same procedure as in Example 3 except for preparing an aqueous solution of sulfuric acid in such a way that the molar ratio of Co, Ni, and Mn, contained in the aqueous solution of sulfuric acid, was 12.5 : 15.5 : 72.0.

(Comparative Example 1)

A lithium transition metal composite oxide of Comparative Example 1 was prepared by the same procedure as in Example 1 except for using, as a mixed powder to be subjected to pellet-molding, a mixed powder, in which the molar ratio of Li and (Co, Ni, Mn) was 145 : 100, prepared by adding 1.047 g of lithium carbonate to 2.204 g of the coprecipitated carbonate precursor prepared in Example 1, and adequately mixing the resulting mixture by using an automatic mortar made of agate.

(Comparative Example 2)

A lithium transition metal composite oxide of Comparative Example 2 was prepared by the same procedure as in Example 1 except for using, as a mixed powder to be subjected to pellet-molding, a mixed powder, in which the molar ratio of Li and (Co, Ni, Mn) was 150 : 100, prepared by adding 1.071 g of lithium carbonate to 2.180 g of the coprecipitated carbonate precursor prepared in Example 1, and adequately mixing the resulting mixture by using an automatic mortar made of agate.

(Comparative Example 3)

A lithium transition metal composite oxide of Comparative Example 3 was prepared by the same procedure as in Example 3 except that in the calcining step, the temperature was raised from room temperature to 700°C over about 10 hours (temperature raising rate 70°C/h), and the pellet was calcined at 700°C for 4 hours.

(Comparative Example 4)

A lithium transition metal composite oxide of Comparative Example 4 was prepared by the same procedure as in Example 3 except that in the calcining step, the temperature was raised from room temperature to 950°C over about 10 hours (temperature raising rate 95°C/h), and the pellet was calcined at 950°C for 4 hours.

(Comparative Example 5)

A lithium transition metal composite oxide of Comparative Example 5 was prepared by the same procedure as in Example 3 except that in the calcining step, the temperature was raised from room temperature to 1000°C over about 10 hours (temperature raising rate 100°C/h), and the pellet was calcined at 1000°C for 4 hours.

(Comparative Example 6)

A sulfate aqueous solution, in which elements of Co, Ni and Mn were dissolved in molar proportions of 12.5 : 19.94 : 67.56, was prepared. Meanwhile, a temperature of a reaction vessel filled with ion-exchange water was maintained at 50°C, and a NaOH aqueous solution was added dropwise to the ion-exchange water to adjust a pH thereof to 11.5. Next, dissolved oxygen was removed by bubbling an inert gas. The sulfate aqueous solution was added dropwise at a feed rate of 3 ml/min while stirring the content in the reaction vessel. Simultaneously, a hydrazine aqueous solution as a reducing agent was added dropwise at a feed rate of 0.83 ml/min. While the dropwise addition was continued, the temperature of the reaction vessel was maintained at 50°C, and a NaOH aqueous solution was appropriately added dropwise while monitoring a pH so that the pH always falls within the range of 11.5 ± 0.05. After the completion of dropwise addition, stirring was stopped and the content of the reaction vessel was kept still for 12 hours or more. Next, the resulting coprecipitated product was separated by filtration and dried at 100°C under ordinary pressure in an air atmosphere by using an oven. After drying, the coprecipitated product was pulverized lightly to an extent of leveling particle sizes. Thereby, a dried powder was obtained.

Lithium hydroxide was added to the dried powder so as to have the molar ratio of Li and (Co + Ni + Mn) of 130 : 100, and the resulting mixture was dry-mixed to prepare a mixed powder. The mixed powder was calcined at 900°C for 4 hours under ordinary pressure in an air atmosphere. After calcination, a heater was turned off to leave the powder in the furnace to be cooled naturally. After a lapse of all night and all day, it was checked that a temperature of the furnace was 100°C or less, and then the powder was taken out and pulverized lightly to an extent of leveling particle sizes. In this way, a lithium transition metal composite oxide of Comparative Example 6 was prepared.

(Comparative Example 7)

A lithium transition metal composite oxide of Comparative Example 7 was prepared by the same procedure as in Example 3 except for changing a rate of the dropwise addition of the sulfate aqueous solution to 30 ml/min in the step of preparing the coprecipitated carbonate precursor.

(Comparative Example 8)

A lithium transition metal composite oxide of Comparative Example 8 was prepared by the same procedure as in Example 3 except that in the calcining step, the temperature was raised from room temperature to 900°C over 2 hours (temperature raising rate 450°C/h), and the pellet was calcined at 900°C for 4 hours.

Production conditions of Examples 1 to 18 and Comparative

Examples 1 to 8 are cataloged and shown in Table 1.

[Table 1]

| | Ratio Li/Me | Type of Coprecipitated Precursor | Dropwise-addition Rate ml/min | Time of Stirring Continued after Dropwise Addition h | Calcination Temperature °C | Temperature Raising Time h |
|---|---|---|---|---|---|---|
| Example 1 | 1.250 | Carbonate | 3 | 3 | 900 | 10 |
| Example 2 | 1.275 | Carbonate | 3 | 3 | 900 | 10 |
| Example 3 | 1.300 | Carbonate | 3 | 3 | 900 | 10 |
| Example 4 | 1.325 | Carbonate | 3 | 3 | 900 | 10 |
| Example 5 | 1.350 | Carbonate | 3 | 3 | 900 | 10 |
| Example 6 | 1.400 | Carbonate | 3 | 3 | 900 | 10 |
| Example 7 | 1.425 | Carbonate | 3 | 3 | 900 | 10 |
| Example 8 | 1.300 | Carbonate | 3 | 1 | 900 | 10 |
| Example 9 | 1.300 | Carbonate | 3 | 5 | 900 | 10 |
| Example 10 | 1.300 | Carbonate | 3 | 10 | 900 | 10 |
| Example 11 | 1.300 | Carbonate | 3 | 15 | 900 | 10 |
| Example 12 | 1.300 | Carbonate | 3 | 20 | 900 | 10 |
| Example 13 | 1.425 | Carbonate | 3 | 1 | 900 | 10 |
| Example 14 | 1.300 | Carbonate | 3 | 3 | 800 | 10 |

(continued)

|  | Ratio Li/Me | Type of Coprecipitated Precursor | Dropwise-addition Rate ml/min | Time of Stirring Continued after Dropwise Addition h | Calcination Temperature °C | Temperature Raising Time h |
|---|---|---|---|---|---|---|
| Example 15 | 1.300 | Carbonate | 3 | 3 | 900 | 10 |
| Example 16 | 1.300 | Carbonate | 3 | 3 | 900 | 10 |
| Example 17 | 1.300 | Carbonate | 3 | 3 | 900 | 10 |
| Example 18 | 1.300 | Carbonate | 3 | 3 | 900 | 10 |
| Comparative Example 1 | 1.450 | Carbonate | 3 | 3 | 900 | 10 |
| Comparative Example 2 | 1.500 | Carbonate | 3 | 3 | 900 | 10 |
| Comparative Example 3 | 1.300 | Carbonate | 3 | 3 | 700 | 10 |
| Comparative Example 4 | 1.300 | Carbonate | 3 | 3 | 950 | 10 |
| Comparative Example 5 | 1.300 | Carbonate | 3 | 3 | 1000 | 10 |
| Comparative Example 6 | 1.300 | Hydroxide | 3 | 3 | 900 | 10 |
| Comparative Example 7 | 1.300 | Carbonate | 30 | 3 | 900 | 10 |
| Comparative Example 8 | 1.300 | Carbonate | 3 | 3 | 900 | 2 |

As a result of X-ray diffraction measurement of a powder using a $CuK_\alpha$ tube, each of the lithium transition metal composite oxides of Examples 1 to 18 and Comparative Examples 1 to 8 was found to have a single phase having a crystal structure of an $\alpha$-$NaFeO_2$ type. Further, as a result of composition analysis, it was verified that the compositional ratios of the transition metal Me are Co : Ni: Mn = 12.5 : 19.94 : 67.56 in Examples 1 to 14, and Co : Ni : Mn = 4.0 : 28.44 : 67.56, 21.0 : 11.44 : 67.56, 12.5 : 24.5 : 63.0, 12.5 : 15.5 : 72.0 in Examples 15 to 18, and the ratios Li/Me are identical to the values in a column of "Ratio Li/Me" in Table 1.

(Measurement of Pore Volume Distribution)

Pore volume distributions of the lithium transition metal composite oxides of Examples 1 to 18 and Comparative Examples 1 to 8 were measured according to following conditions and procedure. For measurement of the pore volume distribution, "autosorb iQ" and a control/analysis software "ASiQwin" manufactured by Quantachrome Instruments were used. 1.00 g of the lithium transition metal composite oxide which is a sample of a measuring object was put in a sample tube for measurement, and dried in a vacuum at 120°C for 12 hours, and thereby, a water content in the sample to be measured was adequately removed. Next, isotherms on an adsorption side and on a desorption side were measured within a relative pressure P/P0 (P0 is about 770 mmHg) range of 0 to 1 by the nitrogen gas adsorption method using liquid nitrogen. Then, the pore distribution was evaluated by calculating by BJH method using the isotherms on a desorption side.

Consequently, in any of the lithium transition metal composite oxides of Examples 1 to 18 and Comparative Examples 1, 3, 4 and 6 to 8 described above, the pore size, at which a differential pore volume determined by BJH method from an adsorption isotherm using nitrogen gas adsorption method exhibits a maximum value, fell within the range of 30 to 40 nm. In Comparative Example 2, the pore size, at which the differential pore volume exhibits a maximum value, was 61 nm. In Comparative Example 5, a point, at which the differential pore volume curve exhibits a maximum value, was not definitely found. Values of the measured peak differential pore volume are shown in Table 2. Incidentally, with respect to Comparative Example 2, a value of the peak differential pore volume at 61 nm is shown in Table 2. With respect to Comparative Example 5, a value of the differential pore volume at 35 nm is shown in Table 2.

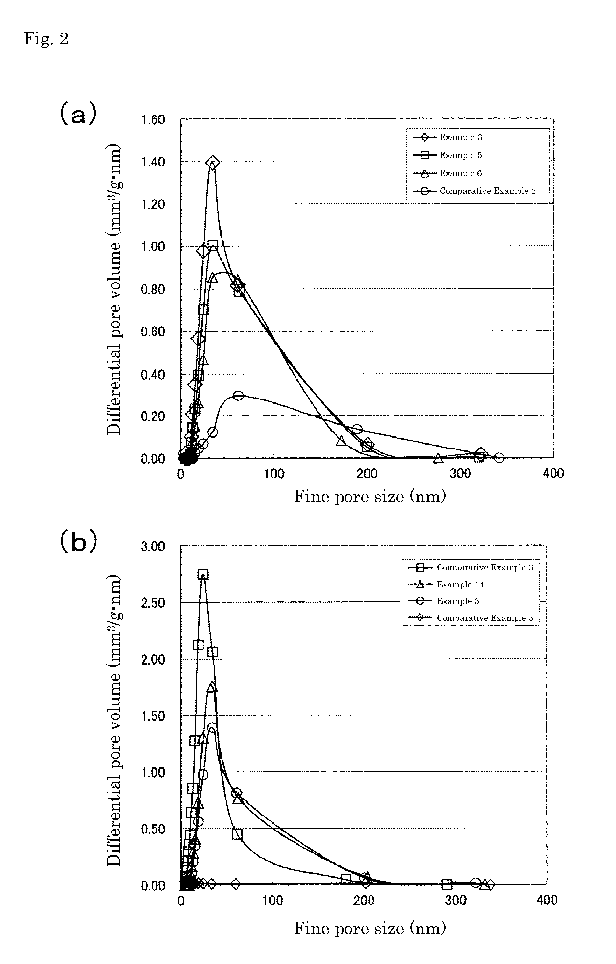

The differential pore volume curves of some Examples and Comparative Examples are shown in Fig. 2 as representatives.

(Measurement of Particle Size)

Particle size distributions of the lithium transition metal composite oxides of Examples 1 to 18 and Comparative Examples 1 to 8 were measured according to following conditions and procedure. Microtrac (model number: MT3000) manufactured by NIKKISO CO., LTD. was used as a measurement apparatus. The measurement apparatus consists of an optical table, a sample supply part and a computer loaded with a control software, and a wet cell with a laser light transmissive window is installed on the optical table. A measurement principle is a system in which a wet cell, through which a dispersion containing a sample of measuring object dispersed in a dispersing solvent is circulated, is irradiated with laser light, and a distribution of scattering light from the measurement sample is converted to a distribution of particle size. The dispersion is stored in the sample supply part and circularly supplied to the wet cell by a pump. Ultrasonic vibration is constantly applied to the sample supply part. Water was used as the dispersing solvent. Microtrac DHS for Win98 (MT3000) was used for the measurement control software. With respect to "material information" set and input in the measurement apparatus, 1.33 was set as "refractive index" of the solvent, "TRANSPARENT" was selected as "degree of clearness", and "non-sphere" was selected as "spherical particle". Operation "Set Zero" is carried out prior to measurement of a sample. The operation "Set Zero" is an operation for removing the influence which disturbance elements (glass, stain on a glass surface, asperities on a glass surface, etc.) other than scattering light from the particles exert upon subsequent measurement. In the "Set Zero" operation, only water, a dispersing solvent, is put into the sample supply part. Then, background measurement is performed with only water, a dispersing solvent, circulated through the wet cell to store background data on the computer. Subsequently, an operation "Sample LD (Sample Loading)" is performed. The operation "Sample LD" is an operation for optimizing a sample concentration in the dispersion circularly supplied to the wet cell at the time of measurement, and an operation of manually charging the sample of measuring object into the sample supply part until the sample amount reaches an optimal amount according to instructions of the measurement/control software. Subsequently, a button of "Measurement" is pushed, and thereby, a measurement operation is performed. The measurement operation is repeated twice, and measured results are output as an average value thereof from the control computer. The measurement results are obtained as a particle size distribution histogram as well as the respective values of D10, D50 and D90 (D10, D50 and D90 are particle sizes at which cumulative volumes in the particle size distribution of the secondary particles reach 10%, 50% and 90%, respectively). Measured values of D50 are shown in Table 2 as "D50 Particle Size (nm)".

(Preparation and Evaluation of Nonaqueous Electrolyte Secondary Battery)

Each of the lithium transition metal composite oxides in Examples 1 to 18 and Comparative Examples 1 to 8 was used as a positive active material for a nonaqueous electrolyte secondary battery, and a nonaqueous electrolyte secondary battery was prepared by the following procedure, and battery characteristics thereof were evaluated.

A positive active material, acetylene black (AB) and polyvinylidene fluoride (PVdF) were mixed in a mass ratio of 85 : 8 : 7. To this, N-methylpyrrolidone as a dispersion medium was added, and the resulting mixture was kneaded and dispersed to prepare a coating solution. Incidentally, a mass ratio of the PVdF was shown on a solid mass basis since a solution in which a solid content was dissolved or dispersed was used. The coating solution was applied onto an aluminum foil current collector having a thickness of 20 $\mu$m to prepare a positive electrode plate.

A lithium metal was used for a counter electrode (negative electrode) in order to observe the behavior of the positive electrode alone. The lithium metal was closely attached to a nickel foil current collector. It was prepared in such a manner that the capacity of the nonaqueous electrolyte secondary battery was controlled adequately by the positive electrode.

As an electrolyte solution, a solution obtained by dissolving $LiPF_6$, so as to have the concentration of 1 mol/l, in a mixed solvent in which a volume ratio of EC/EMC/DMC was 6 : 7 : 7, was used. A microporous membrane made of polypropylene, in which an electrolyte-retaining property is improved by surface modification using polyacrylate, was used as a separator. Further, a nickel plate having a lithium metal foil stuck thereto was used as a reference electrode. A metal-resin composite film composed of polyethylene terephthalate (15 $\mu$m)/aluminum foil (50 $\mu$m)/metal-adhesive polypropylene film (50 $\mu$m) was used for a casing body. The respective electrodes were housed in the casing body in such a way that open ends of a positive electrode terminal, a negative electrode terminal and a reference electrode terminal were exposed to the outside. A fusion-bonding margins where inner surfaces of the metal-resin composite films are opposed to each other was hermetically sealed except a portion serving as a hole for injection of a solution.

On the nonaqueous electrolyte secondary batteries thus prepared, an initial charge-discharge step of two cycles was performed at 25°C. The voltage control was all performed for a positive electrode potential. Charge was carried out at a constant current constant voltage charge of 0.1 CmA current and 4.6 V voltage. The condition of ending the charge was set to be the time point when the electric current value was decreased to 0.02 CmA. Discharge was carried out at constant current discharge in which a current is 0.1 CmA and an end voltage is 2.0 V. In all cycles, a quiescent time of 30 minutes was set after charge and after discharge. Here, a percentage of discharge capacity to a charge electricity at a first cycle in the initial charge-discharge step was recorded as "initial efficiency (%)". In this way, nonaqueous electrolyte secondary batteries of Examples and Comparative Examples were completed.

A charge-discharge test of three cycles was performed on the completed nonaqueous electrolyte secondary battery. The voltage control was all performed for a positive electrode potential. The conditions of the charge-discharge cycle test are the same as the conditions of the above initial charge-discharge step except for setting the charge voltage to 4.3 V (vs. Li/Li$^+$). In all cycles, a quiescent time of 30 minutes was set after charge and after discharge. Here, a discharge capacity at the third cycle was recorded as a "discharge capacity (mAh/g)".

(High Rate Discharge Test)

Next, the high rate discharge test was carried out by the following procedure. First, the constant current constant voltage charge of 0.1 CmA current and 4.3 V voltage was carried out. After a quiescent time of 30 minutes, the constant current discharge of 1 CmA current and 2.0 V end voltage was carried out, and the discharge capacity at this time was recorded as a "high rate discharge capacity (mAh/g)".

(Power Performance Test at Low SOC Region)

After the high rate discharge test, the constant current constant voltage charge of 0.1 CmA current and 4.3 V voltage was carried out, and an amount of charge at this time was measured. After the quiescence of 30 minutes, the constant current discharge of 0.1 CmA current was carried out and the discharge was rested at the point of time when 70% of the amount of charge was passed.

After a lapse of 30 minutes from discharge quiescence, a test, in which discharge is carried out for 1 second at various discharge current rate, was performed. Specifically, first, discharge was carried out at a current of 0.1 CmA for 1 second, and after the quiescence of 2 minutes, auxiliary charge was carried out at a current of 0.1 CmA for 1 second. Further, after the quiescence of 2 minutes, discharge was carried out at a current of 1 CmA for 1 second, and after the quiescence of 2 minutes, auxiliary charge was carried out at a current of 0.1 CmA for 10 seconds. Moreover, after the quiescence of 2 minutes, discharge was carried out at a current of 2 CmA for 1 second, and after the quiescence of 2 minutes, auxiliary charge was carried out at a current of 0.1 CmA for 20 seconds. These results were plotted on a voltage drop after the discharge of 1 second at various currents versus a current value graph, and a curve-fitting based on a method of least square was performed, and Eo which is a pseudo value when a discharge rate is zero, and DC resistance R were respectively determined from an intercept and a slope of the resulting graph. The discharge end voltage was assumed as 2.5 V, and a power at 30% SOC was determined from the following formula. The results are shown in Table 2.

$$\text{Power at 30\% SOC (W)} = 2.5 \times (\text{E0} - 2.5)/\text{R}$$

(Measurement of Oxygen Positional Parameter)

The battery having undergone the above-mentioned high rate discharge test was further subjected to residual discharge under the condition of constant current discharge in which a current is 0.1 CmA and an end voltage is 2.0 V, and then the positive electrode plate was taken out of the battery casing body in a dry room. The positive electrode plate taken out was subjected to X-ray diffraction measurement with a composite adhering to the current collector without being cleaned. Crystal structure analysis by Rietveld method was performed on all diffracted rays excluding peaks resulting from aluminum used as a metal foil current collector. As a software used for Rietveld analysis, RIETAN 2000 (Izumi et al., Mat. Sci. Forum, 321-324, p.198 (2000)) was used. As a profile function used for analysis, a pseudo-Voigt function of TCH was used. A peak position shift parameter was previously refined by using a silicon standard sample (Nist 640c) having a known lattice constant. A crystal structure model of the positive active material is set to a space group R3-m, and the following parameters were refined at each atom position.

· background parameter
· lattice constant
· oxygen positional parameter z

· half width parameter of a Gauss function
· half width parameter of a Lorentz function
· asymmetry parameter
· preferred-orientation parameter
· isotropic atomic displacement parameter (however, fixed to 0.75 for a Li atom)

Diffraction data between 15° and 85° (CuKα) was used as actual data, and this was refined to such an extent that an S value representing a difference from a crystal structure model is reduced to below 1.3.

Values of the oxygen positional parameter z thus obtained are shown in Table 2.

[Table 2]

| | Oxygen Positional Parameter z | Peak Differential Pore Volume mm$^3$/ (g·nm) | D50 Particle Size μm | Initial Efficiency % | Discharge Capacity mAh/g | High Rate Discharge Capacity mAh/g | Power at 30% SOC W |
|---|---|---|---|---|---|---|---|
| Example 1 | 0.262 | 1.55 | 8 | 94 | 220 | 172 | 25 |
| Example 2 | 0.261 | 1.46 | 8 | 93 | 223 | 179 | 28 |
| Example 3 | 0.260 | 1.39 | 8 | 92 | 226 | 188 | 28 |
| Example 4 | 0.261 | 1.02 | 8 | 92 | 224 | 186 | 27 |
| Example 5 | 0.261 | 1.00 | 8 | 90 | 222 | 183 | 26 |
| Example 6 | 0.261 | 0.85 | 8 | 89 | 220 | 177 | 25 |
| Example 7 | 0.262 | 0.78 | 8 | 88 | 216 | 172 | 25 |
| Example 8 | 0.260 | 1.14 | 5 | 92 | 225 | 192 | 33 |
| Example 9 | 0.261 | 1.08 | 13 | 92 | 224 | 190 | 18 |
| Example 10 | 0.261 | 1.05 | 15 | 92 | 224 | 189 | 16 |
| Example 11 | 0.261 | 0.99 | 18 | 92 | 225 | 190 | 15 |
| Example 12 | 0.261 | 0.87 | 21 | 92 | 223 | 191 | 12 |
| Example 13 | 0.262 | 0.75 | 5 | 88 | 217 | 174 | 25 |
| Example 14 | 0.262 | 1.76 | 8 | 93 | 213 | 170 | 17 |
| Example 15 | 0.262 | 1.44 | 8 | 90 | 218 | 177 | 24 |
| Example 16 | 0.261 | 1.31 | 8 | 90 | 215 | 179 | 25 |
| Example 17 | 0.262 | 1.35 | 8 | 91 | 217 | 177 | 25 |
| Example 18 | 0.262 | 1.48 | 8 | 88 | 215 | 176 | 24 |
| Comparative Example 1 | 0.267 | 0.55 | 8 | 79 | 185 | 158 | 19 |
| Comparative Example 2 | 0.268 | 0.30 | 8 | 77 | 182 | 137 | 16 |
| Comparative Example 3 | 0.267 | 2.75 | 8 | 94 | 183 | 151 | 11 |
| Comparative Example 4 | 0.267 | 0.43 | 8 | 75 | 176 | 148 | 17 |
| Comparative Example 5 | 0.268 | 0.14 | 8 | 68 | 152 | 122 | 10 |
| Comparative Example 6 | 0.268 | 0.13 | 8 | 76 | 173 | 116 | 8 |

(continued)

|  | Oxygen Positional Parameter z | Peak Differential Pore Volume mm$^3$/ (g·nm) | D50 Particle Size μm | Initial Efficiency % | Discharge Capacity mAh/g | High Rate Discharge Capacity mAh/g | Power at 30% SOC W |
|---|---|---|---|---|---|---|---|
| Comparative Example 7 | 0.268 | 1.43 | 8 | 90 | 211 | 156 | 16 |
| Comparative Example 8 | 0.267 | 0.58 | 8 | 80 | 184 | 155 | 18 |

It is found from Table 2 that when lithium transition metal composite oxides of Examples 1 to 18, in which the oxygen positional parameter, determined from crystal structure analysis by Rietveld method based on an X-ray diffraction pattern, is 0.260 or more and 0.262 or less, are used, the nonaqueous electrolyte secondary battery has a larger discharge capacity and more excellent high rate discharge performance than the nonaqueous electrolyte secondary battery using one of lithium transition metal composite oxides of Comparative Examples 1 to 8 in which the oxygen positional parameter is 0.267 to 0.268.

Also, it is found from Table 2 that by using the lithium transition metal composite oxides of Examples 1 to 18 and Comparative Examples 3 and 7 in which a peak differential pore volume, determined by BJH method from an adsorption isotherm using nitrogen gas adsorption method, is 0.75 or more (g·nm), the initial efficiency of the nonaqueous electrolyte secondary battery becomes excellent. Also, it is found that in Examples 1 to 18, both the high rate discharge performance and the initial efficiency become excellent.

It is found from the comparison of Examples 3, and 8 to 12 that a power at 30% SOC is improved by achieving the D50 of 8 μm or less.

Also, it is found that among Examples 1 to 18, by using the lithium transition metal composite oxides of Examples 1 to 8, 13, and 15 to 18 in which the D50 is 8 μm or less, and a peak differential pore volume, determined by BJH method from an adsorption isotherm using nitrogen gas adsorption method, falls within a range of 0.75 to 1.55 mm$^3$/(g·nm), power performance of the nonaqueous electrolyte secondary battery in a low SOC region becomes excellent.

In Examples described above, values of molar ratios Li/Me of Li to the transition metal element Me in the lithium transition metal composite oxide are described based on a mixing ratio between the coprecipitated carbonate precursor subjected to the calcining step and lithium carbonate. Further, values of the D50 in the measurement of the particle size distribution of the lithium transition metal composite oxide are described in terms of the results of measuring the particle size distribution of the lithium transition metal composite oxide before preparing an electrode. However, in the case of a nonaqueous electrolyte secondary battery having a history of charge-discharge, the above-mentioned value of Li/Me and value of the D50 can be determined by performing treatment according to a procedure described below and collecting the positive active material.

First, in order to adequately bringing the positive active material contained in the positive electrode into a state of a discharge end, it is preferred that a cell is configured between the positive electrode and a negative electrode which can release lithium ions in an amount required for adequately bringing the positive electrode into a state of a discharge end, and discharge of the positive electrode is performed. Metal lithium may be used as the negative electrode. While a two terminal cell may be used as the cell, preferably, a three terminal cell provided with a reference electrode is used, and a positive potential is controlled and monitored with respect to the reference electrode. Where possible, an electrolyte solution to be used for the cell preferably has the composition which is identical to that of the nonaqueous electrolyte used in the nonaqueous electrolyte secondary battery. Examples of an operation of discharging the positive electrode using the above-mentioned cell include an operation in which continuous discharge or intermittent discharge is performed at a current of 0.1 CmA or less by setting a discharge end potential to 2.0 V (vs. Li/Li$^+$). After the operation of discharging, it is confirmed that an open circuit potential becomes 3.0 V (vs. Li/Li$^+$) or less by providing a sufficient quiescent time. When the open circuit potential after the operation of discharging exceeds 3.0 V (vs. Li/Li$^+$), it is required to repeat the above-mentioned operation by further employing a smaller discharge current value until the open circuit potential becomes 3.0 V (vs. Li/Li$^+$) or less.

In the positive electrode having undergone such an operation, it is preferred to remove the electrolyte solution adhering to the positive electrode after being taken out from the cell. The reason for this is that when the electrolyte solution adheres to the positive electrode, a lithium salt dissolved in the electrolyte solution has an effect on the results of analyses of values of Li/Me. Examples of a method of removing the electrolyte solution include a method comprising cleaning the electrolyte solution by a volatile solvent. The volatile solvent is preferably a solvent in which the lithium salt is easily dissolved. A specific example of the solvent includes dimethyl carbonate. A solvent in which a water content is reduced to a lithium battery grade is preferably used for the volatile solvent. The reason for this is that when the water content is high, Li in the positive active material is eluted, and therefore there is a fear that the correct value of Li/Me cannot be determined.

Next, a positive composite containing a positive active material is collected from the positive electrode. The positive composite contains a conducting agent and a binder in many cases. Examples of a method for removing the binder from the positive composite include a method comprising using a solvent in which the binder can be dissolved. For example, when the binder is estimated to be polyvinylidene fluoride, there is a method in which the positive composite is immersed in a sufficient amount of N-methylpyrrolidone and refluxed at 150°C for several hours, and then a powder including a positive active material is separated from a solvent including the binder by filtration or the like. Examples of a method for removing the conducting agent from a powder containing the positive active material from which the binder is thus removed include a method comprising removing a carbonaceous material through oxidation/decomposition by heat treatment in the case where the conducting agent is estimated to be a carbonaceous material such as acetylene black. While the condition required of the heat treatment is heating of the positive active material to a temperature at which the conducting agent is thermally decomposed or higher in an oxygen-containing atmosphere, a temperature not having an effect on the properties of the positive active material as far as possible is preferred since there is a fear that the properties of the positive active material may vary when a temperature of the heat treatment is too high. In the case of the positive active material of the present invention, examples of the condition of the heat treatment include heating at 700°C in the air.

In a research institution to which the present inventor belongs, the positive active material was collected from a nonaqueous electrolyte secondary battery, in which a common lithium transition metal composite oxide was used as a positive active material, by undergoing the operation procedure described above and a value of the D50 was measured, and consequently, it was confirmed that the value of the D50 maintained approximately that of the positive active material before preparing the electrode. Incidentally, while the positive active material of the present invention is spherical, some positive active material particles may collapse depending on conditions of pressing at the time of preparing a positive electrode plate. It is possible to grasp how much ratio of the positive active material collapses by observing the positive electrode plate taken out from a battery by SEM. When it can be predicted that collapsed particles of the positive active material are contained in the positive active material subjected to the measurement of a particle size distribution, it is recommended to determine the value of D50 upon correcting data of measurements so as to exclude particles of 2 $\mu$m or less.

The reason why the lithium transition metal composite oxide of the present invention having the oxygen positional parameter of 0.262 or less has more excellent high rate discharge performance than the lithium transition metal composite oxide having the oxygen positional parameter of 0.267 or more, is not necessarily clear, but the present inventor considers that since having a smaller value of the oxygen positional parameter means that an O (oxygen) position is more apart from a Li (lithium) position, this may be linked with the fact that Li hardly undergoes an interaction with an oxygen atom in electrochemically intercalating/detaching Li.

The present inventor considers as follows for the operation and effect which the particle size and the pore size of the lithium transition metal composite oxide of the present invention exert on the initial efficiency or the power performance.

In the so-called "LiMeO$_2$ type" active material, Li is thought to exist only in a Li layer (3b site) in a crystal structure shown in Fig. 1, whereas in the lithium transition metal composite oxide of the present invention, Li is thought to exist not only in the Li layer (3b site) but also in a Me (transition metal) layer (3a site) since the lithium transition metal composite oxide is a kind of the so-called "lithium-excess type" active material. Here, it is thought that the Li existing in the 3a site is regularly arranged in the 3a site after synthesis of the active material, that is, before carrying out the first charge, but the Li existing in the 3a site is significantly reduced in the regularity of atomic configuration after undergoing the first charge and the first discharge. This is supposed from the fact that as a result of the X-ray diffraction measurement, a plurality of superlattice diffraction peaks are found before the first charge-discharge, and the superlattice diffraction peaks almost disappear in the second charge-discharge cycle and afterward. From this, it is thought that at the first charge, the lithium transition metal composite oxide of the present invention requires a high potential as energy for disrupting the regularity of configuration of a Li atom in the 3a site, and on the other hand, at the first discharge, arrangement of Li in the 3a site is made on a random basis. As described above, the lithium transition metal composite oxide of the present invention is particularly low in the diffusivity in a solid phase in the first charge-discharge process, and therefore this composite oxide is thought to be a material having low initial efficiency. Therefore, in order to improve the initial efficiency, it is thought to be important that pores between the primary particles composing the secondary particle is in a state in which the nonaqueous electrolyte being an object of giving/receiving of Li ions can adequately exist. Further, in order to improve power performance, it is thought to be preferred that a particle size of the secondary particle is a certain value or less in addition to the above points.

INDUSTRIAL APPLICABILITY

Since the active material of the present invention is an active material for a nonaqueous electrolyte secondary battery which has a large discharge capacity, and is excellent in high rate discharge performance, the active material can be effectively used for nonaqueous electrolyte secondary batteries of a power supply for electric vehicles, a power supply for electronic equipment, and a power supply for electric power storage.

**Claims**

1. An active material for a nonaqueous electrolyte secondary battery containing a lithium transition metal composite oxide which has a crystal structure of an $\alpha$-NaFeO$_2$ type and is represented by a compositional formula Li$_{1+\alpha}$Me$_{1-\alpha}$O$_2$ (Me is a transition metal element including Co, Ni and Mn, $\alpha > 0$),
   wherein in the lithium transition metal composite oxide, a compositional ratio Li/Me of lithium Li to the transition metal element Me is 1.25 to 1.425, and
   an oxygen positional parameter, determined from crystal structure analysis by Rietveld method at the time of using a space group R3-m as a crystal structure model based on an X-ray diffraction pattern in a state of a discharge end, is 0.262 or less.

2. The active material for a nonaqueous electrolyte secondary battery according to claim 1,
   wherein in the lithium transition metal composite oxide, an oxygen positional parameter, determined from crystal structure analysis by Rietveld method at the time of using a space group R3-m as a crystal structure model based on an X-ray diffraction pattern, is 0.260 or more and 0.262 or less.

3. The active material for a nonaqueous electrolyte secondary battery according to claim 1,
   wherein in the lithium transition metal composite oxide, a pore size, at which a differential pore volume determined by BJH method from an adsorption isotherm using nitrogen gas adsorption method exhibits a maximum value, falls within the range of 30 to 40 nm, and
   the peak differential pore volume is 0.75 mm$^3$/(g·nm) or more.

4. The active material for a nonaqueous electrolyte secondary battery according to claim 1,
   wherein in the lithium transition metal composite oxide, D50, a particle size at which a cumulative volume reaches 50% in a particle size distribution of the secondary particles, is 8 $\mu$m or less.

5. The active material for a nonaqueous electrolyte secondary battery according to claim 1,
   wherein in the lithium transition metal composite oxide, D50, a particle size at which a cumulative volume reaches 50% in a particle size distribution of the secondary particles, is 8 $\mu$m or less,
   a pore size, at which a differential pore volume determined by BJH method from an adsorption isotherm using nitrogen gas adsorption method exhibits a maximum value, is 30 to 40 nm, and
   the peak differential pore volume is 0.75 to 1.55 mm$^3$/(g·nm).

6. A method for producing the active material for a nonaqueous electrolyte secondary battery according to any one of claims 1 to 5, comprising the steps of
   coprecipitating a compound of a transition metal element Me including Co, Ni and Mn in a solution to obtain a coprecipitated precursor of transition metal carbonate, and
   mixing the coprecipitated precursor with a lithium compound in such a way that a molar ratio Li/Me of Li to the transition metal element Me of the lithium transition metal composite oxide is 1.25 to 1.425, and calcining the resulting mixture at a temperature of 800 to 900°C.

7. An electrode for a nonaqueous electrolyte secondary battery containing the active material for a nonaqueous electrolyte secondary battery according to any one of claims 1 to 5.

8. A nonaqueous electrolyte secondary battery including the electrode for a nonaqueous electrolyte secondary battery according to claim 7.

Fig. 1

EP 2 790 254 A1

Fig. 2

(a)

(b)

## INTERNATIONAL SEARCH REPORT

| International application No. |
|---|
| PCT/JP2012/081481 |

A. CLASSIFICATION OF SUBJECT MATTER
*H01M4/505*(2010.01)i, *C01G53/00*(2006.01)i, *H01M4/525*(2010.01)i

According to International Patent Classification (IPC) or to both national classification and IPC

B. FIELDS SEARCHED

Minimum documentation searched (classification system followed by classification symbols)
H01M4/505, C01G53/00, H01M4/525

Documentation searched other than minimum documentation to the extent that such documents are included in the fields searched
Jitsuyo Shinan Koho          1922–1996     Jitsuyo Shinan Toroku Koho     1996–2013
Kokai Jitsuyo Shinan Koho    1971–2013     Toroku Jitsuyo Shinan Koho     1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-289726 A (Mitsubishi Chemical Corp.), 10 December 2009 (10.12.2009), paragraphs [0235] to [0241]; table 3 & US 2010/0209771 A1    & EP 2202828 A1 & EP 2466671 A2    & WO 2009/031619 A1 & KR 10-2010-0063041 A   & CN 101796672 A & CN 102769130 A | 1-8 |
| A | JP 2008-293988 A (GS Yuasa Corp.), 04 December 2008 (04.12.2008), tables 1 to 5 & JP 4556377 B    & EP 1391950 A1 & EP 2144314 A2   & WO 2002/086993 A1 & DE 60237441 D    & TW 541745 B | 1-8 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 February, 2013 (04.02.13) | 12 February, 2013 (12.02.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/081481

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-032655 A (Sumitomo Chemical Co., Ltd.), 12 February 2009 (12.02.2009), paragraphs [0017] to [0024] & US 2011/0059363 A1 & EP 2174915 A1 & WO 2009/005164 A1 & KR 10-2010-0037599 A & CN 101790496 A & TW 200920699 A | 1-8 |
| P,X | WO 2012/091015 A1 (GS Yuasa International Ltd.), 05 July 2012 (05.07.2012), claims 1 to 3 & JP 2012-151083 A & JP 2012-151084 A & JP 2012-151085 A | 1 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010086690 A
- JP 2002124261 A
- JP 2000323123 A
- JP 2005123179 A
- JP 2011029132 A
- JP 2007257985 A
- JP 2007123255 A
- JP 2009205893 A

**Non-patent literature cited in the description**

- **IZUMI et al.** *Mat. Sci. Forum,* 2000, vol. 321-324, 198